# EUROPÄISCHE PATENTSCHRIFT

(11) **EP 3 059 431 B1**
(45) Veröffentlichungstag und Bekanntmachung des Hinweises auf die Patenterteilung: **01.05.2019**
(21) Anmeldenummer: 16156314.3
(22) Anmeldetag: 18.02.2016
(51) Int. Cl.: F02K 1/09, F02K 3/075, F02K 1/72, F02K 1/76

(54) **TRIEBWERKSVERKLEIDUNG EINER GASTURBINE MIT SCHUBUMKEHRVORRICHTUNG UND IM QUERSCHNITT VERSTELLBARER AUSSTRÖMDÜSE**
AIRCRAFT ENGINE COWL OF A GAS TURBINE WITH THRUST REVERSER AND VARIABLE AREA FAN NOZZLE
CARÉNAGE D'UNE TURBINE À GAZ COMPRENANT UN DISPOSITIF D'INVERSEUR DE POUSSÉE ET D'UNE TUYÈRE À SECTION VARIABLE

(30) Priorität: 23.02.2015 DE 102015203219
(43) Veröffentlichungstag der Anmeldung: 24.08.2016
(73) Patentinhaber: Rolls-Royce Deutschland Ltd & Co KG, 15827 Blankenfelde-Mahlow (DE)
(72) Erfinder: TODOROVIC, Predrag, 10437 Berlin (DE); MARQUEZ, Carlos, 10585 Berlin (DE); SCHIEFFER, Dr. Gero, 12309 Berlin (DE)
(74) Vertreter: Hoefer & Partner Patentanwälte mbB

(56) Entgegenhaltungen:
- EP-A2- 2 522 831
- EP-A2- 2 628 936
- US-A- 3 779 010
- US-A1- 2010 005 777
- US-B2- 8 677 733

## Beschreibung

Die Erfindung bezieht sich auf eine Schubumkehrvorrichtung eines Fluggasturbinentriebwerks gemäß den Merkmalen des Oberbegriffs des Anspruchs 1.

Im Einzelnen bezieht sich die Erfindung auf eine Schubumkehrvorrichtung eines Fluggasturbinentriebwerks mit einem Kerntriebwerk und einem dieses umgebenden Nebenstromkanal, sowie mit einer den Nebenstromkanal umschließenden vorderen Verkleidung und einer in Axialrichtung verschiebbaren hinteren Verkleidung, sowie mit um den Umfang angeordneten Kaskadenelementen, welche in einen sich bei einer Verschiebung der hinteren Verkleidung zu der vorderen Verkleidung ergebenden Zwischenraum durch eine im Wesentlichen axiale Verschiebung einbringbar sind.

Zum Stand der Technik wird auf die US 8,677,733 B2 hingewiesen. Dort ist eine Triebwerksverkleidung mit einer Schubumkehrvorrichtung gezeigt, bei welcher eine hintere Verkleidung mittels eines separaten Antriebs in Axialrichtung verschiebbar ist. Die Verschiebung erfolgt in zwei Stufen. In einer ersten Stufe wird die hintere Verkleidung nur über einen Teil der maximal möglichen Verschiebelänge verfahren, um einen Ringspalt zu öffnen, durch welchen Luft aus dem Nebenstromkanal zur Umgebung hin abgeführt werden kann, um die Querschnittsfläche der Ausströmdüse des Nebenstromkanals zu verändern. In einer zweiten Position erfolgt eine vollständige Verschiebung der hinteren Verkleidung, um mittels eines zweiten, separaten Antriebs die Kaskadenelemente in die sich bildende Schubumkehröffnung einzubringen. Gleichzeitig wird der Nebenstromkanal mittels türartiger Sperrelemente verschlossen, so dass die gesamte Strömung zur Schubumkehr gegen die Flugrichtung umgeleitet werden kann.

Die teilweise Verschiebung der hinteren Verkleidung in die erste Position erfolgt beispielsweise, um Vibrationen oder Strömungsablösungen am Fan zu vermeiden und ein Flattern des Fans zu verhindern.

Die Kaskadenelemente weisen zum einen Schubumkehrleitschaufeln auf, die die Strömung zur Schubumkehr umlenken. Zum anderen sind an einem Teil der Gesamtlänge der Kaskadenelemente Strömungsleitschaufeln vorgesehen, welche die Strömung bei der Verstellung der Querschnittsfläche der Austrittsdüse so umlenken sollen, dass sich die Strömung an die Oberfläche der hinteren Verkleidung anlegt.

Bei dieser vorbekannten Konstruktion erweist es sich als nachteilig, dass die hintere Verkleidung und die Kaskadenelemente jeweils eigene Antriebe aufweisen müssen, wobei der Antrieb der Kaskadenelemente diese in unterschiedliche Positionen verschiebt.

Aus dem Stand der Technik sind auch Konstruktionen bekannt, bei welchen feststehende Kaskadenelemente zur Anwendung kommen, deren Funktion abhängig von der jeweiligen Position der hinteren Verkleidung ist.

Die vorbekannten Konstruktionen zeichnen sich insgesamt durch ein relativ hohes Gewicht aus. Sie erfordern hinsichtlich des Antriebs der einzelnen Elemente einen hohen Aufwand und eine komplexe Steuerung. Ein weiterer Nachteil liegt auch in der hohen Geräuschentwicklung. Bei feststehenden Kaskaden ergibt sich eine größere Baulänge der Triebwerksverkleidung (nacelle), weil feststehende Kaskaden immer vollständig in der Reiseflugkonfiguration (stowed position) in der Triebwerksverkleidung (transcowl) aufgenommen sind. Durch die passend ausgebildete Annulusform in der Schubumkehrkonfiguration (deployed position) wird die Richtung der Luft über eine scharfe Kante umgelenkt, wodurch ein Fangehäuse (fan ramp) im "Luftschatten" ist und keine positive Wirkung an der Luftströmungsumlenkung hat. Hierdurch ist die Effizienz der Schubumkehrer reduziert. Derartige Triebwerksverkleidungen weisen ein hohes Gewicht auf und zeichnen sich durch einen schlechteren Wirkungsgrad aus.

Die EP 2 628 936 A2 zeigt eine Fluggasturbinen-Schubumkehrvorrichtung mit einem Triebwerk, eine Triebwerksverkleidung, deren hinterer Bereich in Axialrichtung des Triebwerks von einer geschlossenen Vorwärtsschubposition in eine nach hinten verschobene Schubumkehrposition verschiebbar ist, in welcher sich ein im Wesentlichen ringförmiger Freiraum zu einem vorderen, feststehenden Bereich der Triebwerksverkleidung ergibt, wobei der hintere Bereich der Triebwerksverkleidung mit Umlenkelementen und Blockagetüren gekoppelt ist, welche in der Vorwärtsschubposition vollständig innerhalb des vorderen Bereichs der Triebwerksverkleidung angeordnet sind, wobei zwischen dem vorderen Bereich und dem hinteren Bereich zumindest ein Antriebselement angeordnet ist, welches die axiale Verschiebung des hinteren Bereichs bewirkt, wobei das Antriebselement zweistufig ausgebildet ist und in einer ersten Stufe eine Axialverschiebung um einen axialen Teilverschiebeweg, und in einer zweiten Stufe eine Axialverschiebung um den vollen axialen Verschiebeweg, bewirkt.

Der Erfindung liegt die Aufgabe zugrunde, eine Triebwerksverkleidung der eingangs genannten Art zu schaffen, welche bei einfachem Aufbau und einfacher, kostengünstiger Herstellbarkeit die Nachteile des Standes der Technik vermeidet und bei geringem Gewicht und kurzer Baulänge eine verbesserte Funktionalität und eine erhöhte Sicherheit aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß wird somit eine Triebwerksverkleidung eines Fluggasturbinentriebwerks mit einer Schubumkehrvorrichtung geschaffen, mit einem Kerntriebwerk und einem dieses umgebenden Nebenstromkanal, sowie mit einer den Nebenstromkanal umschließenden vorderen Verkleidung und einer in Axialrichtung verschiebbaren hinteren Verkleidung, sowie mit um den Umfang angeordneten Kaskadenelementen, welche in einen sich bei einer Verschiebung der hinteren Verkleidung zu der vorderen Verkleidung ergebenden Zwischenraum durch eine im Wesentlichen axiale Verschiebung einbringbar sind, dadurch gekennzeichnet, dass die Kaskadenelemente direkt mit der hinteren Verkleidung verbunden sind, dass die hintere Verkleidung eine gerundete äussere Vorderkante aufweist und dass das Kaskadenelement an seinem hinteren Bereich ein Strömungsleitelement aufweist, vor welchem mehrere Schubumkehrleitschaufeln angeordnet sind und hinter welchem zumindest eine Strömungsleitschaufel angeordnet ist, deren Wölbungsform der Rundung der äusseren Vorderkante der hinteren Verkleidung gleicht.

Die Erfindung zeichnet sich durch eine Reihe erheblicher Vorteile aus. Zunächst ist erfindungsgemäß die hintere Verkleidung mit den Kaskadenelementen gekoppelt, so dass für die Kaskadenelemente kein zusätzlicher Antrieb erforderlich ist. Vielmehr führt die Verschiebung der hinteren Verkleidung gleichzeitig zu einer Verschiebung der Kaskadenelemente in axialer Richtung.

Im Rahmen der Beschreibung der Erfindung beziehen sich die Begriffe "vorderer" und "hinterer" jeweils auf die Strömungsrichtung an der Triebwerksverkleidung bzw. durch den Nebenstromkanal. Die Begriffe "innen" und "außen" beziehen sich jeweils auf eine Radialrichtung, ausgehend von der Triebwerksachse oder deren Axialrichtung.

Erfindungsgemäß weisen die Kaskadenelemente somit eine Unterteilung ihrer Funktionalität in Längsrichtung auf. Der vordere Bereich der Kaskadenelemente ist mit Schubumkehrleitschaufeln versehen, welche bei einer vollständig verschobenen hinteren Verkleidung in der durch diese Verschiebung gebildeten Schubumkehröffnung angeordnet sind und die Strömung des Nebenstromkanals zur Schubumkehr gegen die Hauptströmungsrichtung umlenken. Dieser mit den Schubumkehrleitschaufeln versehene Bereich der Kaskaden wird durch das Strömungsleitelement unterteilt, welches sich in einem hinteren Bereich des Kaskadenelements befindet. Hinter dem Strömungsleitelement ist zumindest eine Strömungsleitschaufel vorgesehen, welche eine entgegengesetzte Wölbung, bezogen auf die Schubumkehrleitschaufeln, aufweist. Diese Wölbung ist so ausgebildet, dass eine durch einen Ausströmspalt austretende Teilströmung aus dem Nebenstromkanal umgelenkt und strömungsoptimiert entlang der Oberfläche der hinteren Verkleidung geführt wird. Abhängig von der Verschiebung der hinteren Verkleidung kann somit die gewünschte Funktionalität der Kaskadenelemente erreicht werden.

Erfindungsgemäß ist es besonders günstig, wenn radial innen an der gerundeten äusseren Vorderkante der hinteren Verkleidung (Blocker Doors) eine im Wesentlichen ringförmige abgerundete Ausnehmung in der hinteren Verkleidung ausgebildet ist. Diese Ausnehmung führt in vorteilhafter Weiterbildung zu einer Querschnittskontur des vorderen Bereichs der hinteren Verkleidung, welche S-förmig oder Schwanenhalsförmig ist. Diese Kontur wird zum einen durch die Abrundung der äusseren Vorderkante der hinteren Verkleidung und zum anderen durch die Ausgestaltung der ringförmigen abgerundeten Ausnehmung sichergestellt. Die Strömungsleitschaufel des Kaskadenelements, welche in ihrer Wölbung der Rundung der äusseren Vorderkante der hinteren Verkleidung angepasst ist, wirkt somit wie ein Vorflügel einer Tragfläche eines Flugzeugs und legt die durch den Ausströmspalt austretende Strömung in strömungstechnisch optimierter Weise auf die Oberfläche der hinteren Verkleidung.

In besonders günstiger Weiterbildung der Erfindung ist vorgesehen, dass das Strömungsleitelement einen im Wesentlichen dreieckigen Querschnitt aufweist und an seiner Vorderseite gleich zu der Wölbung der Kontur der Schubumkehrleitschaufeln und an seiner Hinterseite gleich der Wölbung der Strömungsleitschaufel ausgebildet ist. Hierdurch ergibt sich eine optimierte Strömungsführung, wobei das Strömungsleitelement die beiden funktionellen Bereiche des Kaskadenelements unterteilt, ohne die Funktionalität des Kaskadenelements zu beeinträchtigen.

Zur Realisierung der Schubumkehr ist es besonders vorteilhaft, wenn am vorderen Bereich der hinteren Verkleidung an deren Innenseite zumindest ein schwenkbares türartiges Sperrelement (Blocker Door) angeordnet ist. Im normalen Flugzustand ist das Sperrelement in die hintere Verkleidung eingeschwenkt, so dass die Strömung durch den Nebenstromkanal nicht behindert wird. Auch im teilweise verschobenen Zustand der hinteren Verkleidung zur Anpassung des Querschnitts der Austrittsdüse ist das Sperrelement in der hinteren Verkleidung angeordnet. Beim Verschwenken des Sperrelements in der Schubumkehrposition der hinteren Verkleidung verschließt das Sperrelement zumindest zum Teil den Ausströmspalt, so dass eine geringere Strömung an der gerundeten äusseren Vorderkante der hinteren Verkleidung vorbeiströmt.

Erfindungsgemäß wird somit die hintere Verkleidung zusammen mit den Kaskadenelementen mittels einer einzigen Antriebseinrichtung in unterschiedliche Positionen verschoben. Hierdurch ergibt sich zum einen eine erhebliche Vereinfachung der Gesamtkonstruktion, welche mit einer deutlichen Gewichtsreduzierung verbunden ist. Zum anderen wird eine betriebssichere Konstruktion geschaffen, da nur ein einziger Antrieb erforderlich ist, der gesteuert und überwacht werden muss. Erfindungsgemäß können somit viele Komponenten der vorbekannten Schubumkehrvorrichtung genutzt werden.

Im Folgenden wird die Erfindung anhand eines Ausführungsbeispiels beschrieben. Dabei zeigt:
- Fig. 1: eine schematische Darstellung eines Gasturbinentriebwerks gemäß der vorliegenden Erfindung,
- Fig. 2: eine vereinfachte Seiten-Schnittansicht der erfindungsgemäßen Schubumkehrvorrichtung im teilweise geöffneten Zustand, und
- Fig. 3: eine Ansicht, analog Fig. 2 in der Schubumkehrposition.

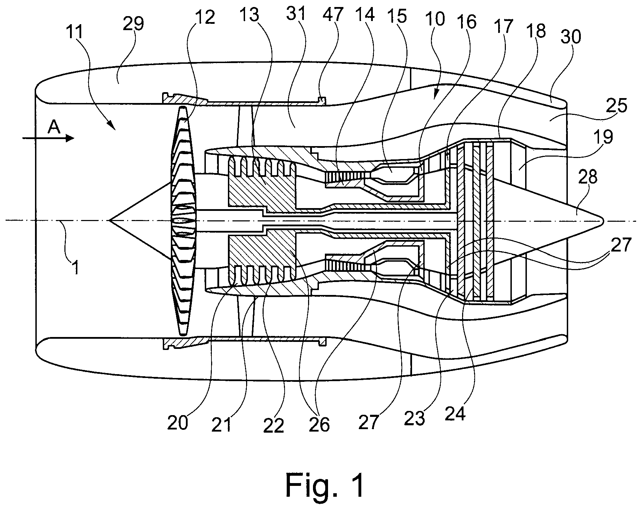

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Kerntriebwerksgehäuse 21 in einen ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenrotorschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenrotorschaufeln 24 drehen sich im Betrieb um die Triebwerksachse 1. Das Bezugszeichen 28 zeigt einen Auslasskonus.

Weiterhin zeigt die Fig. 1 eine Unterteilung der Triebwerksverkleidung (nacelle) in eine vordere Verkleidung 29 und eine hintere, in Axialrichtung, bezogen auf die Triebwerksachse bzw. die Strömungsrichtung, verschiebbare hintere Verkleidung 30. Zwischen dem Kerntriebwerksgehäuse 21 und den äußeren Verkleidungen 29 und 30 ist ein Nebenstromkanal 31 gebildet. Dieser weist eine Austrittsdüse 25 auf, welche durch eine axiale Verschiebung der hinteren Verkleidung 30 in ihrem Querschnitt eingestellt werden kann, um die Strömungsverhältnisse am Fan 12 zu beeinflussen und insbesondere ein Flattern des Fans zu vermeiden.

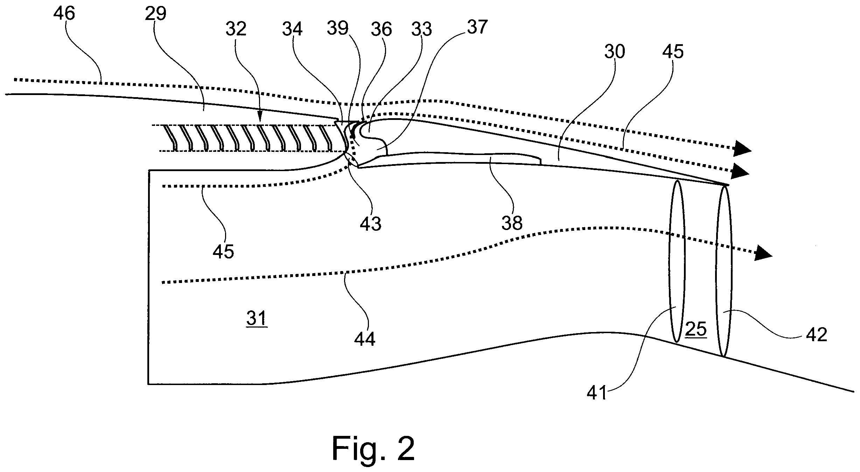

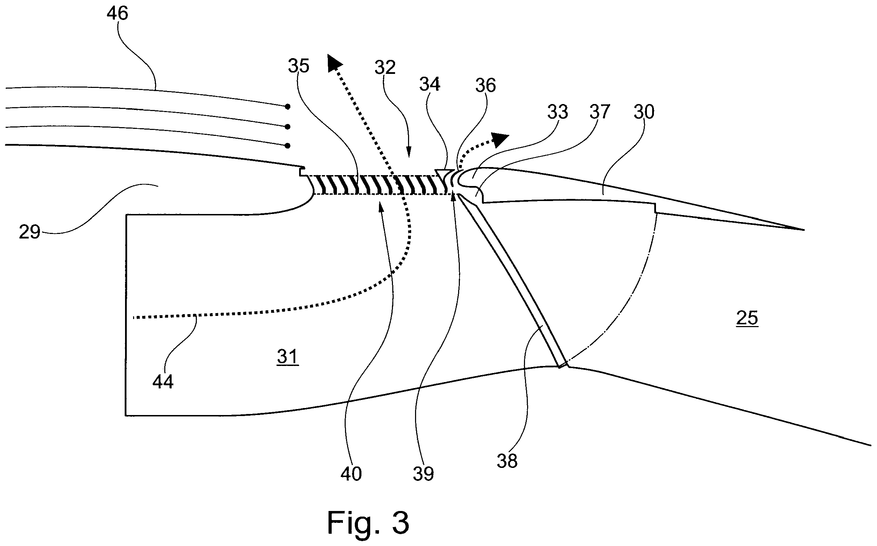

Die Fig. 2 und 3 zeigen vereinfachte Darstellungen eines Ausführungsbeispiels der Erfindung. Dabei ist ein hinterer Bereich der vorderen Verkleidung 29 dargestellt, in welchem in einer Flugposition Kaskadenelemente angeordnet sind. Der vordere Bereich der hinteren Verkleidung 30 liegt in dieser geschlossenen Flugposition im Wesentlichen dichtend gegen den hinteren Bereich der vorderen Verkleidung 29 an. Diese vollständig-geschlossene Flugposition ist in den Fig. 2 und 3 nicht gezeigt. Vielmehr zeigt die Fig. 2 einen teilweise geöffneten Zustand, während die Fig. 3 den Schubumkehrzustand verdeutlicht.

Aus Fig. 2 ist ersichtlich, dass die hintere Verkleidung 30 eine gerundete äussere Vorderkante 33 aufweist. Radial innenliegend zu der gerundeten äusseren Vorderkante 33 ist eine ringförmige, mit gerundeten Wandungen versehene Ausnehmung 37 ausgebildet. Somit ergibt sich eine Schwanenhals-förmige oder S-förmige Kontur. Am inneren Bereich der hinteren Verkleidung 30 ist ein türartiges Sperrelement 38 angeordnet, welches in der geschlossenen Flugposition sowie in der teilweise geöffneten, in Fig. 2 dargestellten Position, in die hintere Verkleidung 30 integriert ist und somit eine Durchströmung des Nebenstromkanals 31 nicht stört.

Die erfindungsgemäßen Kaskadenelemente 32 weisen an ihrem hinteren Endbereich eine Strömungsleitschaufel 36 auf, deren Wölbung strömungstechnisch an die gerundete äussere Vorderkante 33 der hinteren Verkleidung 30 angepasst ist. Die Strömungsleitschaufel 36 bildet somit hinsichtlich ihrer Funktionalität einen Vorflügel, so wie dies aus Landeklappensystemen von Tragflächen bekannt ist. Vor der Strömungsleitschaufel 36 ist ein im Querschnitt dreieckig ausgebildetes Strömungsleitelement 34 angeordnet, welches, wie aus Fig. 3 ersichtlich ist, Teil des Kaskadenelements 32 ist. Das Strömungsleitelement 33 ist an seiner hinteren Seite mit einer Wölbung versehen, welche der Wölbung der Strömungsleitschaufel 36 angepasst ist. Das restliche Kaskadenelement 32 ist in dem in Fig. 2 gezeigten teilweise geöffneten Zustand in der vorderen Verkleidung 29 angeordnet.

Die Fig. 2 zeigt die Austrittsdüse 25. Dabei ist schematisch ein erster Querschnitt 41 eingezeichnet, welcher sich ergibt, wenn sich die hintere Verkleidung 30 in der vollständig geschlossenen Position (Flugzustand) befindet. Der Querschnitt 42, welcher größer ist, als der Querschnitt 41, ergibt sich in dem teilweise geöffneten Zustand, der in Fig. 2 dargestellt ist. Der zusätzliche Querschnitt 43 erweitert die Öffnung.

Die Fig. 2 zeigt mittels der gepunkteten Linie eine Strömung 44 durch den Nebenstromkanal 31. Ein Teil dieser Strömung wird, wie mit dem Bezugszeichen 45 gekennzeichnet, aus dem Nebenstromkanal 31 durch den sich bei einer teilweisen Verschiebung der hinteren Verkleidung 30 gebildeten Ausströmspalt 39 geleitet, wobei sich ein dritter Strömungsquerschnitt 43 ergibt. Die Strömung strömt durch die Ausnehmung 37 (in Fig. 2 nicht im Detail dargestellt) und folgt der Kontur der gerundeten äusseren Vorderkante 33, der Wölbung der Strömungsleitschaufel 36 sowie der Kontur der rückseitigen Fläche des Strömungsleitelements 34 und legt sich strömungsoptimiert an die Außenfläche der hinteren Verkleidung 30 an. Das Bezugszeichen 46 zeigt die Außenströmung an der Triebwerksverkleidung.

Durch eine weitere Verschiebung der hinteren Verkleidung 30 ergibt sich der in Fig. 3 gezeigte Betriebszustand. Bei diesem ist das türartige Sperrelement 38 verschwenkt, um die Austrittsdüse 25 zu verschließen. Durch die Verschiebung der hinteren Verkleidung 30 wird das Kaskadenelement 32 vollständig aus der vorderen Verkleidung 29 bewegt, so dass Schubumkehrleitschaufeln 35 des Kaskadenelements 32 von der Strömung 44 des Nebenstromkanals 31 durchströmt werden können. Hierdurch erfolgt eine Schubumkehr.

Aus Fig. 3 ist ersichtlich, das das verschwenkte Sperrelement 38 zumindest einen Teil des Ausströmspalts 39 blockiert, so dass lediglich eine geringere Restströmung entlang der Strömungsleitschaufel 36 strömen kann. Durch die Schwanenhals-förmige Ausgestaltung des Luftspalts wird die Funktion des Fangehäuses (fan ramp) im Schubumkehrmodus erhalten. Dies bewirkt eine Steigerung der Effizienz.

### Bezugszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Kerntriebwerksgehäuse
- 22: Kompressorlaufschaufeln
- 23: Leitschaufeln
- 24: Turbinenrotorschaufeln
- 25: Austrittsdüse
- 26: Kompressortrommel oder -scheibe
- 27: Turbinenrotornabe
- 28: Auslasskonus
- 29: Vordere Verkleidung
- 30: Hintere Verkleidung
- 31: Nebenstromkanal
- 32: Kaskadenelement
- 33: gerundete äussere Vorderkante
- 34: Strömungsleitelement
- 35: Schubumkehrleitschaufel
- 36: Strömungsleitschaufel
- 37: Ausnehmung
- 38: Sperrelement
- 39: Ausströmspalt
- 40: Schubumkehröffnung
- 41: erster Querschnitt
- 42: zweiter Querschnitt
- 43: dritter Querschnitt
- 44: Strömung durch den Nebenstromkanal
- 45: Strömung
- 46: Außenströmung
- 47: Fangehäuse

## Patentansprüche

1. Triebwerksverkleidung eines Fluggasturbinentriebwerks mit einer Schubumkehrvorrichtung, mit einem Kerntriebwerk (10) und einem dieses umgebenden Nebenstromkanal (31), wobei die Triebwerksverkleidung umfasst:
eine den Nebenstromkanal (31) umschließende vordere Verkleidung (29) und eine in Axialrichtung verschiebbare hintere Verkleidung (30); und
eine Mehrzahl von um den Umfang angeordneten Kaskadenelementen (32), welche in einen sich bei einer Verschiebung der hinteren Verkleidung (30) zu der vorderen Verkleidung (29) ergebenden Zwischenraum durch eine im Wesentlichen axiale Verschiebung einbringbar sind,
**dadurch gekennzeichnet, dass** die Kaskadenelemente (32) direkt mit der hinteren Verkleidung (30) verbunden sind, dass die hintere Verkleidung (30) eine gerundete äussere Vorderkante (33) aufweist und dass das Kaskadenelement (32) an seinem hinteren Bereich ein Strömungsleitelement (34) aufweist, vor welchem mehrere Schubumkehrleitschaufeln (35) angeordnet sind und hinter welchem zumindest eine Strömungsleitschaufel (36) angeordnet ist, deren Wölbungsform der Rundung der äusseren Vorderkante (33) der hinteren Verkleidung (30) gleicht.

2. Triebwerksverkleidung nach Anspruch 1, **dadurch gekennzeichnet, dass** radial innen an der gerundeten äusseren Vorderkante (33) der hinteren Verkleidung (30) eine im Wesentlichen ringförmige abgerundete Ausnehmung (37) in der hinteren Verkleidung (30) ausgebildet ist.

3. Triebwerksverkleidung nach Anspruch 2, **dadurch gekennzeichnet, dass** die Querschnittskontur der gerundeten äusseren Vorderkante (33) und der Ausnehmung (37) im Wesentlichen S-förmig ist.

4. Triebwerksverkleidung nach einem der Ansprüche 1 bis 3, **dadurch gekennzeichnet, dass** das Strömungsleitelement (34) einen im Wesentlichen dreieckigen Querschnitt aufweist und an seiner Vorderseite gleich zu der Wölbung der Kontur der Schubumkehrleitschaufeln (35) und an seiner Hinterseite gleich der Wölbung der Strömungsleitschaufel (36) ausgebildet ist.

5. Triebwerksverkleidung nach einem der Ansprüche 1 bis 4, **dadurch gekennzeichnet, dass** am vorderen Bereich der hinteren Verkleidung (30) an deren Innenseite zumindest ein schwenkbares türartiges Sperrelement (38) angeordnet ist.

6. Triebwerksverkleidung nach einem der Ansprüche 4 oder 5, **dadurch gekennzeichnet, dass** die hintere Verkleidung (30) zur Öffnung eines Ausströmspalts (39) zwischen der Hinterseite des Strömungsleitelements (34) und der gerundeten äusseren Vorderkante (33) in eine erste Position und zur vollständigen Öffnung einer Schubumkehröffnung (40) in eine zweite Position verschiebbar ist.

## Claims

1. Engine cowling of an aircraft gas-turbine engine with a thrust-reversing device, with a core engine (10) and a bypass duct (31) surrounding the latter, wherein the engine cowling includes:
a front cowling (29) enclosing the bypass duct (31) and a rear cowling (30) movable in the axial direction, as well as
a plurality of cascade elements (32) arranged over the circumference which can be placed by a substantially axial movement into an intermediate space resulting from a movement of the rear cowling (30) relative to the front cowling (29), **characterized in that** the cascade elements (32) are connected directly to the rear cowling (30), that the rear cowling (30) has a rounded outer leading edge (33) and that the cascade element (32) has at its rear area a flow-guiding element (34), in front of which several thrust-reversing stator vanes (35) are arranged and behind which at least one flow-guiding vane (36) is arranged whose curvature shape matches the rounding of the outer leading edge (33) of the rear cowling (30).

2. Engine cowling in accordance with Claim 1, **characterized in that** a substantially annular, rounded recess (37) is provided in the rear cowling (30) and radially on the inside on the rounded outer leading edge (33) of the rear cowling (30).

3. Engine cowling in accordance with Claim 2, **characterized in that** the cross-sectional contour of the rounded outer leading edge (33) and of the recess (37) is substantially S-shaped.

4. Engine cowling in accordance with one of the Claims 1 to 3, **characterized in that** the flow-guiding element (34) has a substantially triangular cross-section and is designed at its front side to match the curvature of the contour of the thrust-reversing stator vanes (35) and at its rear side to match the curvature of the flow-guiding vane (36).

5. Engine cowling in accordance with one of the Claims 1 to 4, **characterized in that** at least one swivellable door-like blocking element (38) is arranged at the front area of the rear cowling (30) on the inside of the latter.

6. Engine cowling in accordance with one of the Claims 4 or 5, **characterized in that** the rear cowling (30) can be moved into a first position to open an outflow gap (39) between the rear side of the flow-guiding element (34) and the rounded outer leading edge (33), and into a second position to completely open a thrust-reversing opening (40).

## Revendications

1. Carénage de moteur d'un moteur d'avion à turbine à gaz avec un inverseur de poussée, avec un moteur de base (10) et un canal de flux secondaire (31) entourant celui-ci, sachant que le carénage de moteur comprend:
un carénage avant (29) entourant le canal de flux secondaire (31) et un carénage arrière (30) déplaçable dans le sens axial, et
une pluralité d'éléments de cascade (32) disposés autour de la circonférence et pouvant être amenés dans un espace intermédiaire résultant d'une translation du carénage arrière (30) par rapport au carénage avant (29), au moyen d'une translation essentiellement axiale, **caractérisé en ce que** les éléments de cascade (32) sont reliés directement au carénage arrière (30), que le carénage arrière (30) présente un bord d'attaque extérieur arrondi (33) et que l'élément de cascade (32) présente sur sa zone arrière un élément de guidage de flux (34) devant lequel sont disposées plusieurs aubes fixes d'inversion de poussée (35) et derrière lequel est disposée au moins une aube de guidage de flux (36) dont la cambrure est identique à l'arrondi du bord d'attaque extérieur (33) du carénage arrière (30).

2. Carénage de moteur selon la revendication n° 1, **caractérisé en ce qu'**un évidement (37) arrondi, essentiellement de forme annulaire est prévu dans le carénage arrière (30) et radialement à l'intérieur sur le bord d'attaque extérieur arrondi (33) du carénage arrière (30).

3. Carénage de moteur selon la revendication n° 2, **caractérisé en ce que** le contour de la section du bord d'attaque extérieur arrondi (33) et de l'évidement (37) est essentiellement en forme de S.

4. Carénage de moteur selon une des revendications n° 1 à n° 3, **caractérisé en ce que** l'élément de guidage de flux (34) présente une section essentiellement triangulaire et est identique sur sa face avant à la cambrure du contour des aubes fixes d'inversion de poussée (35) et identique sur sa face arrière à la cambrure de l'aube de guidage de flux (36).

5. Carénage de moteur selon une des revendications n° 1 à n° 4, **caractérisé en ce qu'**au moins un élément de blocage (38) pivotable en forme de porte est disposé sur la zone avant de l'habillage arrière (30), sur la face intérieure de celui-ci.

6. Carénage de moteur selon une des revendications n° 4 ou n° 5, **caractérisé en ce que** le carénage arrière (30) est déplaçable dans une première position pour ouvrir une fente d'échappement (39) entre le côté arrière de l'élément de guidage de flux (34) et le bord d'attaque extérieur arrondi (33) et dans une seconde position pour ouvrir entièrement une ouverture d'inversion de poussée (40).
